# EUROPÄISCHE PATENTSCHRIFT

(11) **EP 4 703 923 B1**
(45) Veröffentlichungstag und Bekanntmachung des Hinweises auf die Patenterteilung: **03.06.2026**
(21) Anmeldenummer: 24197367.6
(22) Anmeldetag: 29.08.2024
(51) Int. Cl.: G06F 21/50, G05B 19/042

(54) **VORRICHTUNG ZUR SICHEREN VERARBEITUNG VON DATEN**
DEVICE FOR SECURE PROCESSING OF DATA
DISPOSITIF DE TRAITEMENT SÉCURISÉ DE DONNÉES

(43) Veröffentlichungstag der Anmeldung: 04.03.2026
(73) Patentinhaber: SICK AG, 79183 Waldkirch (DE)
(72) Erfinder: Liegibel, Pascal, 79183 Waldkirch (DE); Neumann, Thomas, 79227 Schallstadt (DE); Hofmann, Christoph, 79183 Waldkirch (DE); Steinkemper, Heiko, 79183 Waldkirch (DE)
(74) Vertreter: Manitz Finsterwald Patent- und Rechtsanwaltspartnerschaft mbB

(56) Entgegenhaltungen:
- EP-A1- 4 108 393
- EP-A1- 4 390 577
- EP-B1- 2 648 104

## Beschreibung

Die Erfindung betrifft eine Vorrichtung zum Einsatz im industriellen Umfeld, insbesondere Industriemaschine, zur sicheren Verarbeitung von Daten innerhalb einer Software-Container-Umgebung sowie ein Sicherheitsverfahren und eine computerlesbares Speichermedium.

Die Entwicklung sicherheitsgerichteter Applikationen stellt hohe Anforderungen an die Einhaltung strikter Sicherheits- und Zuverlässigkeitsstandards. Diese Anforderungen werden noch komplexer, wenn die Applikation in einer modernen, containerisierten Umgebung wie Kubernetes betrieben werden soll. Kubernetes, als applikationsunabhängige Orchestrierungssoftware, bietet zahlreiche Vorteile hinsichtlich Skalierbarkeit, Flexibilität und Verwaltung von Containern. Jedoch fehlen in Kubernetes spezifische Mechanismen, um sicherheitskritische Anforderungen von Applikationen zu unterstützen. Dies stellt Entwickler vor die Herausforderung, sicherzustellen, dass ihre Anwendungen nicht nur funktional, sondern auch sicher und zuverlässig in einer Kubernetes-Infrastruktur laufen können. Sichere Orchestrierungsplattformen, wie sie in den Patentanmeldungen EP4390577A1, EP24176635A1 oder EP24176655A1 beispielsweise als sichere Kubernetes beschrieben werden, welche hierin in ihrer Gesamtheit für alle Zwecke durch Bezugnahme aufgenommen werden, gehen über die grundlegenden Sicherheitsfunktionen von Kubernetes hinaus und bieten zusätzliche Sicherheitsmechanismen, um sicherheitskritische Anwendungen und Workloads zu unterstützen.

Damit eine Applikation die Sicherheitsinfrastruktur einer sicheren Orchestrierungsplattform nutzen kann, ist es jedoch unerlässlich, die spezifischen Anforderungen solcher Services bereits in der frühen Phase der Anwendungsentwicklung zu berücksichtigen. Eine nachträgliche Integration einer Applikation in die Sicherheitsinfrastruktur solcher Services erfordert erhebliche Änderungen am bestehenden Programmcode und führt zu erhöhten Kosten und Verzögerungen.

EP 2 648 104 B1 offenbart eine Betriebssicherheitswartungsvorrichtung für die Gewährleistung einer Zielsystem- oder Applikationssystemzuverlässigkeit, wobei mittels einer Änderungsanpassungszyklus-Ausführungsvorrichtung sogenannte Zuverlässigkeitsbeschreibungsdaten hinzugefügt und/oder modifiziert werden, wobei die Zuverlässigkeitsbeschreibungsdaten die Zuverlässigkeit des Zielsystems spezifizieren. EP 4 390 577 A1 offenbart eine Sicherheitsvorrichtung zur Überwachung mindestens einer Maschine mit mehreren Logikeinheiten, wobei eine Logikeinheit als Sicherheitsfunktionseinheit zur sicherheitsgerichteten Auswertung von Sensordaten und eine Logikeinheit als Diagnoseeinheit zur Überwachung der Sicherheitsfunktionseinheit ausgebildet ist. EP 4 108 393 A1 bezieht sich auf ein optisches funktionales Sicherheitssystem, bei dem ein digitaler Zwilling eines Automatisierungssystems in Echtzeit nachgebildet wird, um unter Verwendung des digitalen Zwillings durch einen ToF-Sensor gemessene Punktwolkendaten anzupassen.

Es ist somit eine Aufgabe der vorliegenden Erfindung dieser Problematik Sorge zu tragen und eine Vorrichtung zum Einsatz im industriellen Umfeld bereitzustellen, welche eine erhöhte Flexibilität bei der Entwicklung von Applikationen bietet.

Diese Aufgabe wird durch die Gegenstände der unabhängigen Ansprüche gelöst.

Ein erster Aspekt der Erfindung betrifft eine Vorrichtung zum Einsatz im industriellen Umfeld, insbesondere Industriemaschine, zur sicheren Verarbeitung von Daten innerhalb einer Software-Container-Umgebung, umfassend:
eine Datenerzeugungseinheit zur Erzeugung von Applikationsdaten,
eine Datenverarbeitungseinheit zur Verarbeitung der von der Datenerzeugungseinheit bereitgestellten Applikationsdaten innerhalb der Software-Container-Umgebung, wobei die Datenverarbeitungseinheit als Ausführungsumgebung dafür ausgebildet ist, mehrere Logikmodule auf der Datenverarbeitungseinheit ablaufen zu lassen, wobei die Logikmodule umfassen:

zumindest ein Applikationsmodul zur Ausführung zumindest einer Applikation unter Verwendung der Applikationsdaten, wobei das Applikationsmodul dazu konfiguriert ist, Zustandsdaten zu erzeugen, welche der Applikation zugehörig sind, wobei die Zustandsdaten angeben, ob eine Applikation fehlerfrei ausgeführt wird oder ein fehlerhafter Zustand vorliegt, welcher die Ausführung einer Sicherheitsfunktion erfordert,
ein Adaptationsmodul, das dazu konfiguriert ist, die Zustandsdaten von dem Applikationsmodul zu empfangen und die Zustandsdaten in ein für ein Sicherheitsüberwachungsmodul verarbeitbares Format umzuwandeln, und
das Sicherheitsüberwachungsmodul, das dazu konfiguriert ist, die umgewandelten Zustandsdaten von dem Adaptationsmodul zu empfangen und auf Grundlage der umgewandelten Zustandsdaten zu ermitteln, ob ein Fehlerzustand vorliegt, wobei das Sicherheitsüberwachungsmodul eine sicherheitsgerichtete Auswertung der umgewandelten Zustandsdaten leistet,
wobei das Applikationsmodul, das Adaptationsmodul und das Sicherheitsüberwachungsmodul als Teil einer, insbesondere eigenständigen, Anwendungskomponente ausgebildet sind.

Mit anderen Worten stellt das Adaptationsmodul eine Schnittstelle zwischen dem Applikationsmodul und dem Sicherheitsüberwachungsmodul dar, welche die von dem Applikationsmodul gesendeten Zustandsdaten in ein Format übersetzt, das von dem Sicherheitsüberwachungsmodul verarbeitet werden kann. Dies ist insbesondere dann von Vorteil, wenn die Zustandsdaten eine Form aufweisen, welche von dem Sicherheitsüberwachungsmodul nicht verarbeitet werden kann. Mit Hilfe des Adaptationsmoduls kann jede Applikation somit an die Anforderungen des Sicherheitsüberwachungsmoduls, insbesondere auch nachträglich, angepasst werden.

Der Begriff Software-Container-Umgebung bezieht sich beispielsweise auf eine Umgebung, die es ermöglicht, Softwareanwendungen in sogenannten Containern isoliert und portabel auszuführen. Container sind leichtgewichtige, eigenständige Pakete, die alles enthalten, was zur Ausführung der Software notwendig ist, einschließlich des Softwarecodes, der Laufzeit, der Bibliotheken und der Einstellungen. Diese Umgebung bietet mehrere Vorteile, darunter Isolierung, Konsistenz und Effizienz bei der Bereitstellung und Verwaltung von Anwendungen. Container-Umgebungen wie beispielsweise Docker sind bekannt. Für die Verwaltung und den Betrieb von mehreren Containern werden in der Regel Container-Orchestrierungssysteme wie Kubernetes eingesetzt. Solche Container-Orchestrierungssysteme verfügen in der Regel über keine Sicherheitsüberwachungsimplementierungen, die darauf abzielen, die Container-Orchestrierung in sicherheitskritischen oder hochregulierten Umgebungen sicher zu betreiben. Ein jeweiliges Container-Orchestrierungssystem kann aber beispielswiese mit Diagnoseeinheiten bzw. zusätzlichen Sicherheitsüberwachsungsmechanismen erweitert sein, wie beispielsweise in EP4390577A1 dargestellt, um zu einer sicheren Orchestrierungsplattform zu werden. Insbesondere umfassen derartige Sicherheitsüberwachungsimplementierungen Maßnahmen, die ergriffen werden, um die Sicherheit, Verlässlichkeit und Einhaltung von Vorschriften beim Einsatz der Orchestrierungssoftware zu gewährleisten.

Die Erfindung ermöglicht es in solchen Umgebungen mit Hilfe des Adaptationsmoduls eine Applikation an die Anforderungen des Sicherheitsüberwachungsmoduls, insbesondere auch nachträglich, anzupassen, um von den Vorteilen von sicheren Orchestrierungsplattformen Gebrauch zu machen. Beispielsweise ist das Sicherheitsüberwachungsmodul gemäß den Anforderungen der jeweiligen sicheren Orchestrierungsplattform implementiert, sodass die Zustandsdaten von dem Adaptationsmodul an diese Anforderungen angepasst werden. Eine aufwändige Anpassung des Codes des Applikationsmoduls oder eine frühzeitige Berücksichtigung der vordefinierten Anforderungen des Sicherheitsüberwachungsmoduls bzw. der Sicherheitsinfrastruktur des Sicherheitsüberwachungsmoduls ist damit nicht notwendig.

Im Folgenden wird zur Beschreibung der Erfindung zwar der Begriff Industriemaschine verwendet; die entsprechenden Ausführungen beziehen sich jedoch auch auf eine Vorrichtung zum Einsatz im industriellen Umfeld. Die Industriemaschine kann für den Einsatz in industriellen Produktionsprozessen ausgebildet sein. Beispielsweise ist die Industriemaschine darauf ausgelegt, Aufgaben wie Herstellung, Bearbeitung, Montage, Transport, Verpackung oder Qualitätssicherung durchzuführen. Die Industriemaschine kann ferner manuell gesteuert, vollständig automatisiert oder halbautomatisiert betrieben werden. Eine Industriemaschine kann insbesondere einen Roboter, z.B. einen AMR (Autonomous Mobile Robot) oder AGV (Automated Guided Vehicle), ein Edge-Computing-Gerät, ein, insbesondere automatisiertes, Lagersystem, eine Förderanlage, eine Fertigungsanlage und dergleichen umfassen.

Die Verarbeitungseinheit fungiert dabei als Ausführungsumgebung (auch als "Runtime Environment" bezeichnet). Die Verarbeitungseinheit ist somit das strukturelle Element, die Ausführungsumgebung dessen Funktion. Die Verarbeitungseinheit ist mindestens mittelbar mit der Datenerzeugungseinheit verbunden. Sie hat demnach Zugriff auf die Applikationsdaten für deren Verarbeitung, möglicherweise indirekt über zwischengeschaltete weitere Einheiten, und kann beispielsweise über eine Maschinensteuerung der Industriemaschine oder direkt auf die Industriemaschine einwirken.

Auf der Datenverarbeitungseinheit laufen im Betrieb der Industriemaschine mehrere Logikmodule ab. Die Datenverarbeitungseinheit kann zumindest eine Rechenvorrichtung und einen Speicher umfassen. Beispielsweise ist die Datenverarbeitungsvorrichtung ein Computer, beispielsweise ein Hostcomputer, ein Microcontroller, eine Cloud-Computing-Plattform oder dergleichen. Ein Logikmodul bezeichnet allgemein einen Softwarefunktionsblock. Softwarefunktionsblöcke sind insbesondere eigenständige, in sich geschlossene Einheiten innerhalb eines Softwareprogramms, die eine bestimmte Funktion oder Gruppe von Funktionen implementieren. Ein Logikmodul kann beispielsweise als Container, der innerhalb von Kubernetes läuft, ausgestaltet sein.

Das Applikationsmodul, das Adaptationsmodul und/oder das Sicherheitsüberwachungsmodul können in einzelnen Containern oder in einem gemeinsamen Container implementiert werden. Vorteilhafterweise kann das Adaptationsmodul in bestehende Softwareapplikationen auf einfache Weise integriert werden, indem es an einer Schnittstelle zwischen Applikationsmodul und Sicherheitsüberwachungsmodul implementiert wird. Insbesondere kann die Integration in ein bestehendes System auch nachträglich erfolgen, wobei das Adaptationsmodul an die von der Industriemaschine genutzten Softwaretechnologien angepasst werden kann. Auch die Applikationen können reine Softwareapplikationen sein, welche die Verarbeitung, Umwandlung oder Aufbereitung von Daten zum Ziel haben. Insbesondere sind die Applikationen jedoch derart mit weiteren Applikationen gekoppelt, d.h. Applikationen tauschen derart Daten miteinander aus, dass sie Teil einer Gesamtapplikation sind, die eine in der Industriemaschine und der realen Welt feststellbare Wirkung aufweist.

Erfindungsgemäß ist eines der Logikmodule als Sicherheitsüberwachungsmodul ausgebildet, das insbesondere eine sicherheitsgerichtete Auswertung der Zustandsdaten leistet. Ziel der sicherheitsgerichteten Auswertung ist die Erkennung eines Fehlerzustands, d.h. eines sicherheitsrelevanten Ereignisses oder Zustands. Im Falle eines Fehlerzustands wird vorzugsweise ein Sicherheitssignal ausgegeben, um eine sicherheitsgerichtete Reaktion der Industriemaschine auszulösen, mit der die Maschine in einen sicheren Zustand versetzt wird, der eine mögliche Gefahr beseitigt oder wenigstens auf ein hinnehmbares Niveau absenkt.

Die Industriemaschine ist beispielsweise ein Roboter, welcher beispielsweise das ROS-Framework (Roboter Operating System) zur Entwicklung von Robotersoftware verwendet. Beispielsweise können unterschiedliche Applikationen des Roboters in unterschiedlichen Software-Containern (im Folgenden nur noch als "Container" bezeichnet) implementiert sein. Die Industriemaschine kann aber auch ein Fahrzeug, ein Kamerasystem oder jede andere Maschine sein, welche Applikationsdaten zur Ausführung einer Applikation innerhalb einer Software-Container-Umgebung verarbeitet.

Die Applikationsdaten, d.h. Nutzdaten, werden dabei von einer Datenerzeugungseinheit erzeugt. Eine solche Datenerzeugungseinheit ist beispielsweise eine Kamera, ein Sensor oder jedes andere Gerät, welches Daten generieren kann. Im Falle einer virtuellen Applikation kann die Datenerzeugungseinheit eine virtuelle Datenerzeugungseinheit sein. Beispielsweise kann die Datenerzeugungseinheit ein virtueller Sensor sein.

Die bereitgestellten Applikationsdaten werden von dem Applikationsmodul zur Ausführung einer Applikation genutzt. Unter Applikation wird dabei jede Art von computerausführbarer Applikation verstanden. Die Applikation kann beispielsweise jede Applikation sein, welche unter Verwendung einer Datenverarbeitungseinheit, auf der Softwarecode implementiert ist, ausgeführt werden kann. Eine Applikation kann dabei auch eine Teilapplikation sein, welche nur einen Teil einer Gesamtapplikation darstellt, wobei zumindest die Gesamtapplikation einen direkten Wirkbereich in der realen Welt hat. Insbesondere handelt es sich dabei um Applikationen, bei der der zugehörige Softwarecode innerhalb von Software-Containern modularisiert wird. Beispielhafte Applikationen sind: Datenfilterung, Sensordatenaufbereitung, Bilderkennung, Personenerkennung oder dergleichen.

Insbesondere kann die Applikation eine beliebige KI-Applikation sein einschließlich einem neuronalen Netz, Generative AI oder einem KI-Microservice wie NIM (Nvidia Inference Microservices) sein.

Bei Ausführung der Applikation werden von dem Applikationsmodul außerdem Zustandsdaten erzeugt, welche der Applikation zugehörig sind. Die Zustandsdaten können einen Zustand der Applikation wiedergeben. Beispielsweise können die Zustandsdaten angeben, ob eine Applikation fehlerfrei ausgeführt wird oder ein fehlerhafter Zustand vorliegt, welcher die Ausführung einer Sicherheitsfunktion erfordert. Das Applikationsmodul ist insbesondere in der Lage, Daten, z.B. Zustandsdaten, über beliebige Nachrichtensysteme und/oder -technologien wie DDS, HTTP, Socket oder dergleichen zu übermitteln.

Das Adaptationsmodul empfängt diese Zustandsdaten. Da das Sicherheitsüberwachungsmodul jedoch in der Regel vordefinierte Anforderungen an das Format der Eingabedaten stellt, müssen die Zustandsdaten in ein für das Sicherheitsüberwachungsmodul verarbeitbares Format umgewandelt werden. Das Adaptationsmodul führt diese Umwandlung durch und übermittelt die umgewandelten Zustandsdaten an das Sicherheitsüberwachungsmodul. Beispielsweise akzeptiert das Adaptationsmodul Zustandsdaten, die einem vordefinierten Eingabeformate entsprechen, und gibt umgewandelte Zustandsdaten aus, die einem vordefinierten Ausgabeformat entsprechen. Das Adaptationsmodul kann eine Vielzahl von unterschiedlichen Eingabeformaten akzeptieren und verarbeiten.

Weitere Ausführungsformen der Erfindung sind den Ansprüchen, der Beschreibung und den Zeichnungen zu entnehmen.

Wie beschrieben, sind das Applikationsmodul, das Adaptationsmodul und das Sicherheitsüberwachungsmodul als Teil einer, insbesondere eigenständigen, Anwendungskomponente ausgebildet. Insbesondere greifen das Applikationsmodul, das Adaptationsmodul und/oder das Sicherheitsüberwachungsmodul auf dieselben Ressourcen zu. Eigenständig bedeutet hierbei beispielsweise, dass jede Anwendungskomponente eine isolierte Einheit ist, die ihre eigene Umgebung und Ressourcen aufweist. Ein Anwendungskomponente kann beispielsweise einen oder mehrere Container umfassen, welche miteinander Daten austauschen und interagieren, um eine bestimmte Anwendung zu realisieren, wobei die Container einer Anwendungskomponente mit Containern einer anderen Anwendungskomponente beispielsweise über Schnittstellen der Anwendungskomponenten kommunizieren können.

Insbesondere greifen das Applikationsmodul, das Adaptationsmodul und/oder das Sicherheitsüberwachungsmodul auf dasselbe Netzwerk und denselben Speicher zu. Beispielsweise laufen das Applikationsmodul, das Adaptationsmodul und/oder das Sicherheitsüberwachungsmodul auf demselben Host. Sind das Applikationsmodul, das Adaptationsmodul und das Sicherheitsüberwachungsmodul als Teil eines Kubernetes-Ökosystem ausgebildet, kann eine Anwendungskomponente beispielsweise ein Kubernetes-Pod sein, welcher häufig verwendet wird, um eng gekoppelte Container zu hosten, die zusammenarbeiten müssen. Ein Kubernetes Pod ist die kleinste und einfachste Einheit im Kubernetes-Ökosystem. Alle Container in einem Kubernetes Pod teilen sich beispielsweise einen Speicher, eine IP-Adresse, Port-Zuordnungen und können über denselben Host miteinander kommunizieren.

Gemäß einer Ausführungsform sind das Applikationsmodul und das Adaptationsmodul auf demselben Container implementiert, wobei das Adaptationsmodul und das Applikationsmodul dieselben Softwaretechnologien verwenden. Beispielsweise nutzen das Applikationsmodul und das Adaptationsmodul dasselbe Framework, System, dieselbe Programmierbibliothek oder -paradigma und/oder dieselben Datenstrukturen und -typen.

Gemäß einer Ausführungsform sind das Applikationsmodul und das Adaptationsmodul auf unterschiedlichen Containern implementiert, wobei das Adaptationsmodul mittels Anpassungsmechanismen an das Applikationsmodul, insbesondere an die von dem Applikationsmodul genutzten Softwaretechnologien, angepasst ist. Beispielsweise ist das Adaptationsmodul mittels RPC-Mechanismen (Remote Procedure Call) an die von dem Applikationsmodul genutzten Softwaretechnologien angepasst. RPC-Mechanismen sind insbesondere Methoden, die es einem Programm ermöglichen, eine Prozess oder eine Funktion in einem anderen Adressraum, d.h. in einer Umgebung, in welcher beispielsweise eine andere Softwaretechnologie genutzt wird, auszuführen. RPCs können die Netzwerkkommunikation abstrahieren und eine einfache Schnittstelle für die verteilte Anwendungsentwicklung bereitstellen.

Diese Variante hat den Vorteil einer erhöhten Resilienz, falls mehrere Applikationsmodule dasselbe Adaptationsmodul nutzen bzw. mit demselben Adaptationsmodul Daten austauschen. Zudem kann diese Variante mit weniger Overhead und weniger Latenz realisiert werden. Wie bereits beschrieben, können die Softwaretechnologien ein Softwareframework, -system, eine Programmierbibliothek oder - paradigma und/oder Datenstrukturen und -typen betreffen.

Gemäß einer Ausführungsform steht das Adaptationsmodul mit einer Vielzahl von unterschiedlichen Applikationsmodulen in Kommunikation und/oder wird das Adaptationsmodul für eine Vielzahl von unterschiedlichen Applikationen verwendet. Beispielsweise kann das Adaptationsmodul für eine Vielzahl von Applikationen verwendet werden, solange die Applikationen gemäß derselben Technologieplattform, insbesondere demselben Technologieframework oder Softwareframework, implementiert sind. Dies liegt beispielsweise daran, dass das Adaptationsmodul an die jeweiligen Anforderungen angepasst ist, welche eine Technologieplattform stellt. Das Adaptationsmodul kann beispielsweise vorgegebene Datentypen und/oder -formate verarbeiten, welche innerhalb der Technologieplattform verwendet werden. Das Adaptationsmodul kann somit mit mehreren Applikationsmodulen in Kommunikation stehen, welche den Regeln und Anforderungen der Technologieplattform folgen, und Zustandsdaten eines jeweiligen Applikationsmoduls umwandeln, um diese in ein für das Sicherheitsüberwachungsmodul verarbeitbares, d.h. lesbares, Format umzuwandeln.

Ist die Industriemaschine beispielweise ein Roboter, welcher das ROS-Framework nutzt, so kann das Adaptationsmodul an das von dem Roboter verwendeten ROS-Framework angepasst sein und, insbesondere nur, in Kombination mit dem ROS-Framework verwendet werden. Für die Nutzung innerhalb anderer Frameworks kann der Adapter entsprechend angepasst werden.

Gemäß einer Ausführungsform umfassen die Zustandsdaten Zustandsdatenpakete. Ein Zustandsdatenpaket kann zumindest eines der folgenden umfassen: eine Zustandsdatenpaket-ID, eine Applikationsbezeichnung, einen Erstellungszeitpunkt des Zustandsdatenpakets, ein Verifikationszeichen, eine Sequenznummer, einen Typ des Zustandsdatenpakets, einen Status des Zustandsdatenpakets oder ein Attribut des Zustandsdatenpakets. Die Zustandsdaten können beispielsweise in Form von Zustandsdatenpaketen, auch als "Heartbeats" bekannt, übermittelt werden, welche den Zustand der Applikation, insbesondere für einen bestimmten Zeitpunkt, angeben.

Die Zustandsdatenpaket-ID ist beispielsweise eine eindeutige Identifikationsnummer oder -zeichen, anhand dessen das Zustandsdatenpaket identifiziert werden kann.

Die Applikationsbezeichnung ist beispielsweise ein menschlesbarer Name für die Applikation oder einen Bestandteil der Applikation, dem das Zustandsdatenpaket zugehörig ist. Beispielsweise kann das Zustandsdatenpaket nur den Zustand eines Bestandteils der Applikation, beispielsweise einer Teilfunktion innerhalb der Applikation, angeben.

Der Erstellungszeitpunkt des Zustandsdatenpakets gibt insbesondere den Zeitpunkt an, an dem die Applikation das Zustandsdatenpaket erstellt hat.

Mittels des Verifikationszeichen kann eine Richtigkeit des Zustandsdatenpakets festgestellt werden. Beispielsweise kann festgestellt werden, ob die in dem Zustandsdatenpaket enthaltenen Daten plausibel sind und/oder einem bestimmten Format entsprechen. Das Verifikationszeichen kann beispielsweise ein Hashwert oder eine Checksumme sein, welche(r) auf Basis der in dem Zustandsdatenpaket umfassten Daten oder zumindest eines Teils der in dem Zustandsdatenpaket umfassten Daten erzeugt wird. Das Verifikationszeichen kann beispielsweise unter Verwendung einer Funktion oder Rechenvorschrift ermittelt werden, welche die in dem Zustandsdatenpaket umfassten Daten als Eingangswerte annimmt, um das Verifikationszeichen zu ermitteln. Hierzu können beispielsweise Algorithmen und/oder Funktionen wie MD5, SHA-1 oder SHA-256 verwendet werden.

Die Sequenznummer ist beispielsweise eine fortlaufende Nummer, die eine Erstellungsreihenfolge der erstellten Zustandsdatenpakete angibt. Basierend auf der Sequenznummer können die Zustandsdatenpakete somit in chronologischer Reihenfolge vom Adaptationsmodul und/oder Sicherheitsüberwachungsmodul verarbeitet werden.

Bei dem Typ des Zustandsdatenpakets handelt es sich beispielsweise um eine Angabe, welche das Zustandsdatenpaket näher spezifiziert. Dies ist vor allem in Fällen hilfreich, in denen unterschiedliche Arten von Zustandsdatenpaketen existieren. Der Typ kann beispielsweise angeben, welchem Stadium einer Prüfung das Zustandsdatenpaket zugeordnet werden kann. Ferner kann der Typ des Zustandsdatenpakets angeben, für welchen Parameter das Zustandsdatenpaket einen Zustand angibt.

Der Status des Zustandsdatenpakets kann ferner angeben, ob die mit dem Zustandsdatenpaket verbundene Aktion erfolgreich ausgeführt wurde oder nicht. Beispielsweise kann der Status zwei unterschiedliche Werte annehmen, wobei der erste Wert eine erfolgreiche Aktion angibt, während der zweite Wert eine fehlgeschlagene Aktion angibt. Der Status kann somit "fehlgeschlagen" oder "erfolgreich" sein. Beispielsweise kann der Status einen booleschen Wert annehmen, wobei "true" eine erfolgreiche Aktion und "false" eine fehlgeschlagene Aktion angibt. Insbesondere kann das Sicherheitsüberwachungsmodul dazu konfiguriert sein, auf der Grundlage des Status des Zustandsdatenpakets zu ermitteln, ob ein Applikationsfehler vorliegt.

Das Zustandsdatenpaket kann ferner ein oder mehrere Attribute bzw. Attributfelder umfassen, welche zusätzliche nützliche Daten enthalten. Beispielsweise kann ein Attribut eine Liste mit Schlüssel/Wert-Paaren mit applikationsspezifischen Attributen umfassen, die das Zustandsdatenpaket genauer beschreiben. Ein solches Attribut kann beispielsweise ein Statuscode sein, der das Ergebnis der Verarbeitung noch genauer beschreibt.

Gemäß einer Ausführungsform ist das Applikationsmodul dazu konfiguriert, die Zustandsdatenpakete zyklisch zu erzeugen, wobei innerhalb eines Zyklus eine vordefinierte Anzahl an Zustandsdatenpaketen erzeugt wird, wobei die Zustandsdatenpakete eines selben Zyklus dieselbe Sequenznummer aufweisen. Mit anderen Worten können die Zustandsdatenpakete in festen, regelmäßigen Zeitabständen erzeugt werden. Hierdurch kann eine regelmäßige Prüfung des Zustands der Applikation erfolgen, sodass fehlerhafte Zustände schnell erkannt werden. Die Frequenz kann je nach Anforderung variieren, beispielsweise können die Zustandsdatenpakete in Systemen mit sehr hohen Echtzeitanforderungen in zeitlichen Abständen von wenigen Millisekunden, z.B. weniger als 100 ms, 50 ms, 10 ms oder 5ms, übermittelt werden. In anderen Systemen, in denen die Anforderungen niedriger sind, können die zeitlichen Abstände zwischen den Zustandsdatenpaketen auch im Sekundenbereich liegen. Beispielsweise kann der zeitliche Abstand weniger als 30 s, 10 s oder 1 s betragen.

Gemäß einer weiteren Ausführungsform ist das Applikationsmodul dazu konfiguriert, innerhalb eines Zyklus zumindest zwei Zustandsdatenpakete zu erzeugen, wobei zumindest ein Zustandsdatenpaket vom Typ "Verarbeitung gestartet" und zumindest ein Zustandsdatenpaket vom Typ "Verarbeitung beendet" ist. Insbesondere erzeugt das Applikationsmodul ein Zustandsdatenpaket vom Typ "Verarbeitung beendet" unmittelbar im Anschluss an ein Zustandsdatenpaket vom Typ "Verarbeitung gestartet". Ein Zustandsdatenpaket vom Typ "Verarbeitung gestartet" läutet somit einen neuen Zyklus ein, wobei mit jedem Zustandsdatenpaket vom Typ "Verarbeitung gestartet" auch eine neue Sequenznummer vergeben wird. Innerhalb eines Zyklus können aber auch weitere Zustandsdatenpakettypen umfasst sein, welche beispielsweise einen Zwischenschritt einer Verarbeitung oder ein Zwischenergebnis darstellen.

Gemäß einer Ausführungsform ist das Adaptationsmodul dazu konfiguriert, die Zustandsdatenpakete in einer Warteschlange in einer Reihenfolge anzuordnen, welche dem chronologischen Eintreffen der Zustandsdatenpakete entspricht. Die Zustandsdatenpakete können somit anhand ihrer Position in der Warteschlange chronologisch abgearbeitet werden. Die Zustandsdatenpakete können beispielsweise in der Warteschlange verweilen, bis eine weitere Verarbeitung erforderlich oder möglich ist. Insbesondere kann das Sicherheitsüberwachungsmodul festlegen, zu welchem Zeitpunkt eine weitere Verarbeitung der Zustandsdatenpakete erfolgen soll. Es ist auch möglich, dass besonders sicherheitsrelevante Zustandsdatenpakete an eine erste Position in der Warteschlange gesetzt werden, damit diese vorrangig und vor den anderen Zustandsdatenpaketen verarbeitet werden. In einer Ausführungsform, in der das Adaptationsmodul für mehrere Applikationen verwendet wird, können die Zustandsdatenpakete der unterschiedlichen Applikationen in einer einzigen Warteschlange chronologisch angeordnet werden.

Gemäß einer Ausführungsform ist das Adaptationsmodul dazu konfiguriert, in Reaktion auf ein von dem Sicherheitsüberwachungsmodul empfangenes Aktionssignal, welches eine Verarbeitung-ID, eine Sequenznummer und/oder ein Verifikationszeichen umfasst, die Zustandsdatenpakete zu überprüfen, welche der in dem Aktionssignal hinterlegten Sequenznummer zugehörig sind. Das Aktionssignal veranlasst somit die Verarbeitung eines oder mehrerer zusammengehöriger Zustandsdatenpakete. Insbesondere umfasst das Aktionssignal nur die Verarbeitungs-ID, die Sequenznummer und/oder das Verifikationszeichen, wobei keine weiteren Metadaten in dem Aktionssignal enthalten sind. Die weiteren Metadaten zu den Zustandsdatenpaketen können jedoch im Sicherheitsüberwachungsmodul gespeichert sein. Anhand der in dem Aktionssignal enthaltenen Daten können die zugehörigen Zustandsdatenpakete eindeutig bestimmt und aus der Warteschlange in dem Adaptationsmodul ausgewählt werden, um die Überprüfung der Zustandsdatenpakete zu starten.

Gemäß einer Ausführungsform umfasst die Überprüfung eine Vorprüfung, wobei die Vorprüfung umfasst: eine erste Vollständigkeitsprüfung, wobei die Vollständigkeitsprüfung positiv ist, wenn für die Sequenznummer eine vorgegebene Anzahl von zugehörigen Zustandsdatenpaketen vorliegen, und negativ, wenn für die Sequenznummer weniger als die vorgegebene Anzahl an Zustandsdatenpaketen vorliegen, wobei bei einer positiven ersten Vollständigkeitsprüfung eine Auswertung der Zustandsdatenpakete erfolgt, wobei bei einer negativen ersten Vollständigkeitsprüfung eine vordefinierte Zeitspanne abgewartet wird bis eine zweite Vollständigkeitsprüfung erfolgt, wobei bei einer positiven zweiten Vollständigkeitsprüfung eine Auswertung der Zustandsdatenpakete erfolgt, wobei bei einer negativen zweiten Vollständigkeitsprüfung das Adaptationsmodul dazu konfiguriert ist, ein Fehlersignal in einem für das Sicherheitsüberwachungsmodul lesbaren Format an das Sicherheitsüberwachungsmodul zu senden.

Beispielsweise kann anhand eines Vergleichs der tatsächlichen Anzahl der basierend auf der Sequenznummer aus der Warteschlange ausgewählten Zustandsdatenpakete und der vorgegebenen Anzahl festgestellt werden, ob die der Sequenznummer zugehörigen Zustandsdatenpakete vollständig vorliegen. Mit anderen Worten kann festgestellt werden, ob Zustandsdatenpakete fehlen. Die vorgegebene Anzahl ergibt sich beispielsweise aus der Anzahl der Zustandsdatenpakete, welche während eines Zyklus erstellt werden bzw. werden sollten. Falls keine Zustandsdatenpakete fehlen, können die Zustandsdatenpakete in einem nächsten Schritt ausgewertet werden. Falls jedoch Zustandsdatenpakete fehlen, wird eine vordefinierte Zeitspanne abgewartet bis eine zweite Vollständigkeitsprüfung erfolgt. Zusätzlich kann das Adaptationsmodul ein Standby-Signal an das Sicherheitsüberwachungsmodul übermitteln, wobei das Standby-Signal anzeigt, dass die Heartbeats, welche der in dem Aktionssignal angegebenen Sequenznummer zugehörig sind, noch nicht abschließend verarbeitet sind. Das Sicherheitsüberwachungsmodul wird somit darüber in Kenntnis gesetzt, dass die Verarbeitung zu einem entsprechenden Aktionssignal noch nicht abgeschlossen ist, sodass vorerst keine Sicherheitsaktion getriggert wird. Beispielsweise wird nach der ersten Vollständigkeitsprüfung eine vordefinierte Anzahl an Aktionssignalen bzw. Zyklen abgewartet bis die zweite Vollständigkeitsprüfung erfolgt. Ist das Ergebnis der zweiten Vollständigkeitsprüfung ebenfalls negativ, d.h. wenn weiterhin Zustandsdatenpakete fehlen, so wird ein Fehlersignal in einem für das Sicherheitsüberwachungsmodul lesbaren Format an das Sicherheitsüberwachungsmodul gesendet. Ist das Ergebnis der zweiten Vollständigkeitsprüfung positiv, so können die Zustandsdatenpakete in einem nächsten Schritt ausgewertet werden.

Alternativ zur vorstehenden Ausführungsform kann die Vorprüfung auch derart ausgestaltet sein, dass bereits bei einer negativen ersten Vollständigkeitsprüfung das Fehlersignal an das Sicherheitsüberwachungsmodul gesendet wird. In einem solchen Fall erfolgt somit keine zweite Vollständigkeitsprüfung. Dies kann bei besonders sicherheitskritischen Anwendungen die bevorzugte Ausführungsform sein, bei denen nur ein geringes Maß an Toleranzspielraum vorhanden ist.

Gemäß einer Ausführungsform umfasst die Überprüfung der Zustandsdaten eine Auswertung, wobei die Auswertung umfasst: eine Plausibilitätsprüfung zumindest eines der Zustandsdatenpakete und/oder eine Statusprüfung zumindest eines der Zustandsdatenpakete, wobei das Adaptationsmodul dazu konfiguriert ist, bei einer fehlgeschlagenen Plausibilitätsprüfung und/oder bei einer fehlgeschlagenen Statusprüfung ein Auswertungsdatenpaket in einem für das Sicherheitsüberwachungsmodul lesbaren Format an das Sicherheitsüberwachungsmodul zu senden, wobei das Auswertungsdatenpaket einen Fehlerzustand angibt. Falls die Plausibilitätsprüfung und die Statusprüfung hingegen erfolgreich ist, d.h. nicht fehlschlägt, ist das Adaptationsmodul dazu konfiguriert, ein Auswertungsdatenpaket in einem für das Sicherheitsüberwachungsmodul lesbaren Format an das Sicherheitsüberwachungsmodul zu senden, wobei das Auswertungsdatenpaket angibt, dass kein Fehlerzustand vorliegt. In der Plausibilitätsprüfung kann beispielsweise überprüft werden, ob die Daten der Zustandsdatenpakete in einem für die jeweiligen Daten üblichen Bereich liegen. Ferner kann für zumindest ein Datenfeld der Zustandsdatenpakete eine vorgegebene Anzahl an Werten bekannt sein, welche das Datenfeld annehmen können. Stimmt der tatsächliche Feldwert des Datenfelds nicht mit einem der vorgegebenen Feldwerte überein, so kann die Plausibilitätsprüfung für das jeweilige Zustandsdatenpaket fehlgeschlagen sein.

Gemäß einer Ausführungsform umfasst die Plausibilitätsprüfung zumindest eines der Zustandsdatenpakete folgende Prüfungen:
Überprüfung des Verifikationszeichen des Zustandsdatenpakets, welche eine Ermittlung eines Vergleichsverifikationszeichens für das Zustandsdatenpaket unter Verwendung der Daten des Zustandsdatenpakets und einen Vergleich des ermittelten Vergleichsverifikationszeichens mit dem Verifikationszeichen des Zustandsdatenpakets umfasst,
Überprüfung einer Plausibilität des Erstellungszeitpunkts des Zustandsdatenpakets und/oder
Überprüfung, ob die Anzahl der Zustandsdatenpakete eine vorgegebene Anzahl überschreitet oder unterschreitet,
wobei die Plausibilitätsprüfung als fehlgeschlagen gilt, wenn zumindest eine der in der Plausibilitätsprüfung umfassten Prüfungen für zumindest eines der Zustandsdatenpakete fehlschlägt.

Mit der Überprüfung des Verifikationszeichen wird beispielsweise die Korrektheit des in dem Zustandsdatenpaket hinterlegten Verifikationszeichens geprüft, welches, wie bereits zuvor beschrieben, ein Hashwert oder eine Checksumme sein kann. Insbesondere wird mit einer solchen Überprüfung geprüft, ob die von dem Applikationsmodul abgesendeten Daten des Zustandsdatenpakets den von dem Adaptationsmodul empfangenen Daten des Zustandsdatenpakets entsprechen. Das Verifikationszeichen wird nämlich basierend auf den gesamten, in dem Zustandsdatenpaket enthaltenen Daten erzeugt. Hierzu kann beispielsweise eine Hashfunktion verwendet werden, welche die gesamten Daten des Zustandsdatenpakets, mit Ausnahme des Verifikationszeichen, als Eingangswerte annimmt und eine Checksumme oder einen Hashwert als Verifikationszeichen ausgibt. Eine Veränderung eines Datenfelds in dem Zustandsdatenpaket würde somit zur Folge haben, dass sich auch das Verifikationszeichens verändert. Da das Vergleichsverifikationszeichen insbesondere gemäß denselben Vorschriften wie das Verifikationszeichen berechnet oder ermittelt wird, kann anhand eines Vergleichs der beiden Zeichen festgestellt werden, ob die abgesendeten Daten des Zustandsdatenpakets mit den empfangenen Daten des Zustandsdatenpakets übereinstimmen oder ob eine Manipulation der entsprechenden Daten, beispielsweise in Form von Datenkorruption, vorliegt. Stimmen das ermittelte Vergleichsverifikationszeichen und das Verifikationszeichen nicht überein, so stellt dies beispielsweise einen Fehlerzustand dar und die Überprüfung gilt als fehlgeschlagen.

Ferner kann eine Überprüfung der Plausibilität des Erstellungszeitpunkts des Zustandsdatenpakets erfolgen. Eine solche Überprüfung umfasst beispielsweise eine Überprüfung der Schlüssigkeit des Erstellungszeitpunkts bzw. des Zeitstempels des Zustandsdatenpakets. Insbesondere wird geprüft, ob der Erstellungszeitpunkt keinen Negativwert umfasst und/oder ob die Zeitbasis des Erstellungszeitpunkts mit der des von dem Adaptationsmodul verwendeten Zeitbasis übereinstimmt. Sollte die Überprüfung der Plausibilität des Erstellungszeitpunkts negativ ausfallen, d.h. fehlschlagen, so stellt dies beispielsweise einen Fehlerzustand dar und die Überprüfung gilt als fehlgeschlagen.

Die Plausibilitätsprüfung kann ferner eine Überprüfung umfassen, in der geprüft wird, ob die Anzahl der Zustandsdatenpakete eine vorgegebene Anzahl überschreitet oder unterschreitet. Insbesondere wird überprüft, ob die Anzahl der Zustandsdatenpakete eine vorgegebene Anzahl überschreitet, da der Fall der Unterschreitung vorzugsweise bereits in der Vorprüfung geprüft wurde. Es ist aber auch denkbar, dass der Fall der Unterschreitung ebenfalls in der Plausibilitätsprüfung erneut geprüft wird, um eine gewisse Redundanz zu schaffen, welche die Sicherheit des Systems erhöht. Ist das Ergebnis der Überprüfung, dass die Anzahl der Zustandsdatenpakete eine vorgegebene Anzahl überschreitet oder unterschreitet, so stellt dies beispielsweise einen Fehlerzustand dar und die Überprüfung gilt als fehlgeschlagen.

Gemäß einer Ausführungsform umfasst die Statusprüfung eine Prüfung der Status aller Zustandsdatenpakete, welche der Sequenznummer zugehörig sind, wobei die Statusprüfung als fehlgeschlagen gilt, wenn zumindest eines der Zustandsdatenpakete einen Status "fehlgeschlagen" aufweist. Der Status gibt beispielsweise an, ob die mit dem Zustandsdatenpaket verbundene Aktion "erfolgreich" ausgeführt wurde oder ob die mit dem Zustandsdatenpaket verbundene Aktion "fehlgeschlagen" ist. Mit anderen Worten gilt die Statusprüfung als "erfolgreich", wenn alle Status der Zustandsdatenpakete "erfolgreich" sind, d.h. keines der Zustandsdatenpakete einen Status "fehlgeschlagen" aufweist.

Insbesondere wird bei einer erfolgreichen Plausibilitätsprüfung und einer erfolgreichen Statusprüfung ein Auswertungsdatenpaket an das Sicherheitsüberwachungsmodul gesendet, welches einen fehlerfreien Zustand angibt. Das Auswertungsdatenpaket kann zumindest eines der folgenden umfassen: eine Sender-ID, eine Verarbeitungs-ID, eine Sequenznummer, ein Auswertungsergebnis oder ein Verifikationszeichen. Die Sender-ID ist beispielsweise ein Identifikationszeichen, beispielsweise in Form eines menschlesbaren Namens, für das Adaptationsmodul und/oder die Applikation für den das Adaptationsmodul eingesetzt wird. Die Verarbeitungs-ID und die Sequenznummer entsprechen beispielsweise der in dem Aktionssignal enthaltenen Verarbeitungs-ID und Sequenznummer, welches von dem Sicherheitsüberwachungsmodul übermittelt wurde. Das Auswertungsergebnis, gibt an ob die der Sequenznummer zugehörigen Zustandsdatenpakete einen fehlerfreien Zustand anzeigen oder ob ein Fehlerzustand vorliegt. Beispielsweise kann das Auswertungsergebnis als boolescher Wert angegeben werden, wobei "true" einen fehlerfreien Zustand der Zustandsdatenpakete anzeigt und "false" einen Fehlerzustand angibt. Das Verifikationszeichen des Auswertungsdatenpakets kann basierend auf den in dem Auswertungsdatenpaket enthaltenen Daten, mit Ausnahme des Verifikationszeichens selbst, bestimmt sein. Die vorangehenden Ausführungen zum Verifikationszeichen der Zustandsdatenpakete finden entsprechende Anwendung.

Ein weiterer Aspekt der Erfindung betrifft Sicherheitsverfahren zur sicheren Verarbeitung von Daten innerhalb einer Software-Container-Umgebung, wobei das Verfahren umfasst, dass:
von einer Datenerzeugungseinheit Applikationsdaten erzeugt werden,
auf einer Datenverarbeitungseinheit zur Verarbeitung der von der Datenerzeugungseinheit bereitgestellten Applikationsdaten innerhalb der Software-Container-Umgebung mehrere Logikmodule auf der Datenverarbeitungseinheit ablaufen, wobei die Logikmodule ein Applikationsmodul, ein Adaptationsmodul und ein Sicherheitsüberwachungsmodul umfassen,
von dem Applikationsmodul Zustandsdaten erzeugt werden, welche einer Applikation zugehörig sind, wobei die Zustandsdaten angeben, ob eine Applikation fehlerfrei ausgeführt wird oder ein fehlerhafter Zustand vorliegt, welcher die Ausführung einer Sicherheitsfunktion erfordert,
von dem Adaptationsmodul die Zustandsdaten empfangen werden und die Zustandsdaten in ein für ein Sicherheitsüberwachungsmodul verarbeitbares Format umgewandelt werden,
wobei die umgewandelten Zustandsdaten von dem Sicherheitsüberwachungsmodul empfangen werden und auf Grundlage der umgewandelten Zustandsdaten ermittelt wird, ob ein Fehlerzustand vorliegt, wobei das Sicherheitsüberwachungsmodul eine sicherheitsgerichtete Auswertung der umgewandelten Zustandsdaten leistet,
wobei das Applikationsmodul, das Adaptationsmodul und das Sicherheitsüberwachungsmodul als Teil einer, insbesondere eigenständigen, Anwendungskomponente ausgebildet sind.

Ein weiterer Aspekt der Erfindung betrifft ein computerlesbares Speichermedium, umfassend Befehle, die bei der Ausführung durch einen Computer diesen veranlassen, das Sicherheitsverfahren nach einem der vorstehenden Ausführungen auszuführen.

Die vorstehenden Ausführungen zur Industriemaschine gelten für das Sicherheitsverfahren sowie für das computerlesbare Speichermedium entsprechend, dies gilt insbesondere hinsichtlich Vorteilen und Ausführungsformen.

Ferner ist jede Kombination der vorstehenden Ausführungsformen möglich, falls dies nicht explizit ausgeschlossen ist.

Im Folgenden wird die Erfindung rein beispielhaft unter Bezugnahme auf die Zeichnungen dargestellt. Es zeigen:
- Fig. 1: eine Industriemaschine gemäß einer Ausführungsform,
- Fig. 2: ein Ablaufdiagramm, das eine Funktionsweise einer Ausführungsform veranschaulicht,
- Fig. 3a, b: zwei Ausführungsformen der Erfindung,
- Fig. 4: eine Struktur eines Heartbeats, und
- Fig. 5: ein Ablaufdiagramm, das eine Ausführungsform der Erfindung innerhalb einer ROS-Anwendung veranschaulicht.

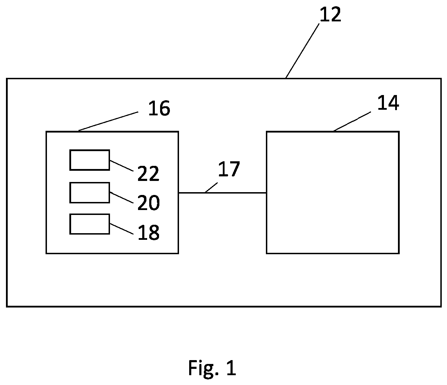

Fig. 1 zeigt eine Industriemaschine 12, beispielsweise ein Roboter, zur sicheren Verarbeitung von Daten innerhalb einer Software-Container-Umgebung, wobei die Industriemaschine 12 eine Datenerzeugungseinheit 14 zur Erzeugung von Applikationsdaten und eine Datenverarbeitungseinheit 16 zur Verarbeitung der von der Datenerzeugungseinheit 14 bereitgestellten Applikationsdaten innerhalb der Software-Container-Umgebung umfasst. Die Datenerzeugungseinheit 14 ist über eine Verbindung 17 mit der Datenverarbeitungseinheit 16 verbunden, um die Applikationsdaten an die Datenverarbeitungsvorrichtung 16 zu übermitteln. Die Datenverarbeitungseinheit 16 ist als Ausführungsumgebung dafür ausgebildet, mehrere Logikmodule 18-22 auf der Datenverarbeitungseinheit ablaufen zu lassen. Die Logikmodule 18-22 umfassen ein Applikationsmodul 18 zur Ausführung zumindest einer Applikation unter Verwendung der Applikationsdaten, wobei das Applikationsmodul 18 dazu konfiguriert ist, Zustandsdaten zu erzeugen, welche der Applikation zugehörig sind, ein Adaptationsmodul 20, das dazu konfiguriert ist, die Zustandsdaten von dem Applikationsmodul 18 zu empfangen und die Zustandsdaten in ein für ein Sicherheitsüberwachungsmodul 22 verarbeitbares Format umzuwandeln, und das Sicherheitsüberwachungsmodul 22, das dazu konfiguriert ist, die umgewandelten Zustandsdaten von dem Adaptationsmodul 20 zu empfangen und auf Grundlage der umgewandelten Zustandsdaten zu ermitteln, ob ein Fehlerzustand vorliegt. In Reaktion auf das Ermitteln eines Fehlerzustands übermittelt das Sicherheitsüberwachungsmodul 22 ein Sicherheitssignal 39 an ein nicht gezeigtes Steuerungsmodul der Datenverarbeitungsvorrichtung 16 oder an eine nicht gezeigte Steuerung der Industriemaschine 12, welche in Reaktion auf das empfangene Sicherheitssignal 39 eine Sicherheitsaktion ausführt. Beispielsweise kann die Sicherheitsaktion ein Rückführen der Industriemaschine 12 in einen sicheren Zustand umfassen. Ist die Industriemaschine 12 beispielsweise ein Roboter, so kann die Sicherheitsaktion umfassen: ein Stoppen des Roboters, ein Einschränken des Bewegungsradius des Roboters und/oder das Ausgeben eines Sicherheitssignals 39, z.B. eines akustischen oder visuellen Sicherheitssignals 39.

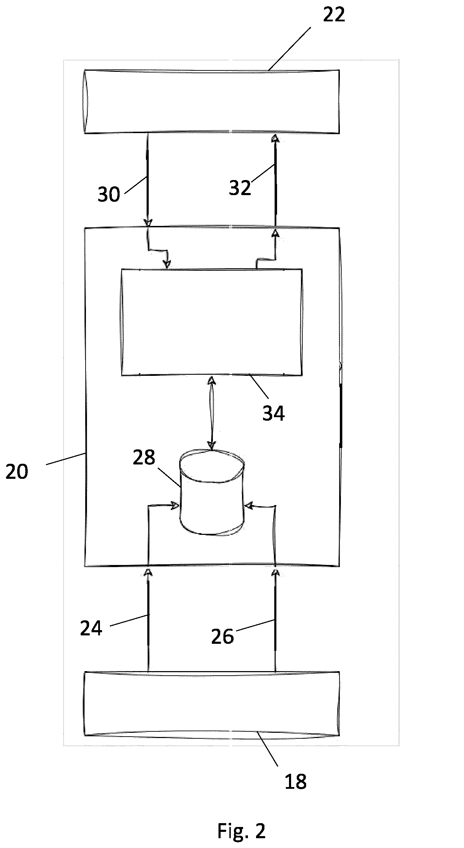

Fig. 2 zeigt ein Ablaufdiagramm, das eine Funktionsweise einer Ausführungsform veranschaulicht. Die zuvor beschriebenen Ausführungen zu Fig. 1 gelten weiterhin, wobei Fig. 2 den Verarbeitungsprozess der Daten ausführlicher darstellt.

Der in Fig. 2 dargestellte Verarbeitungsprozess umfasst in einem ersten Schritt die Verarbeitung von Zustandsdatenpaketen, welche von dem Applikationsmodul 18 zyklisch, d.h. in festen, regelmäßigen Zeitabständen, erzeugt werden, durch ein Adaptationsmodul 20. Die Zustandsdatenpakete enthalten Daten, welche einen Zustand einer zugehörigen Applikation angeben und sind dazu geeignet, festzustellen, ob ein Fehlerzustand der Applikation vorliegt, welcher möglicherweise sicherheitskritisch ist. Im Folgenden werden diese Zustandsdatenpakete als Heartbeats 24,26 bezeichnet. Das Adaptationsmodul 20 empfängt zwei Typen von Heartbeats 24,26: "Verarbeitung gestartet"-Heartbeats 24 und "Verarbeitung beendet"-Heartbeats 26. Diese beiden Heartbeattypen werden innerhalb eines Zyklus von dem Applikationsmodul 18 erzeugt und an das Adaptationsmodul 20 gesendet, wobei jeder Zyklus genau einen Heartbeat 24 vom Typ "Verarbeitung gestartet" und einen Heartbeat 26 vom Typ "Verarbeitung beendet" umfasst.

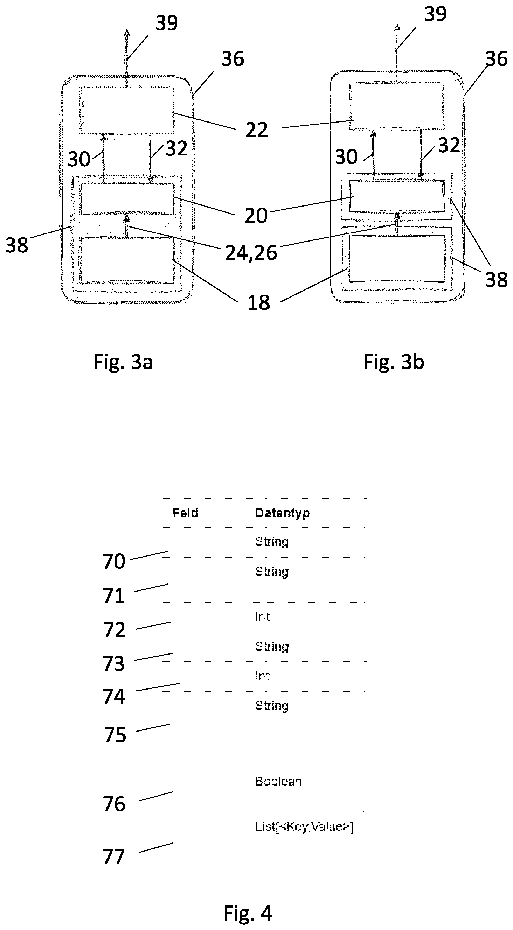

Jeder Heartbeat 24,26 umfasst jeweilige Datenfelder entsprechend einer Heartbeat-ID 70, einer Applikationsbezeichnung 71, eines Erstellungszeitpunkts 72 des Heartbeats 24,26, eines Verifikationszeichens 73, einer Sequenznummer 74, eines Typs 75 des Heartbeats 24,26, eines Status 76 des Heartbeats 24,26 oder eines Attributs 77 des Heartbeats 24,26, wie in Fig. 4 dargestellt ist. Heartbeats 24,26 eines selben Zyklus wird dabei dieselbe Sequenznummer 74 zugeordnet. Die Heartbeats 24,26 werden von dem Adaptationsmodul 20 empfangen und in einer Warteschlange 28, auch Queue genannt, gespeichert. In der Warteschlange 28 werden die Heartbeats 24,26 chronologisch, d.h. entsprechend ihrem Zeitpunkt des Eintreffens, gespeichert, wobei auch der Zugriff auf spezifische Heartbeats 24, 28 anhand ihrer Sequenznummer 74 möglich ist. Es erfolgt keine unmittelbare Verarbeitung der Heartbeats 24,26, sondern sie werden zunächst in der Warteschlange 28 gesammelt und geordnet.

Der nächste Schritt involviert das Sicherheitsüberwachungsmodul 22, welches ein Aktionssignal 30 über eine zuvor geöffnete Schnittstelle an das Adaptationsmodul 20 sendet. Dieses Aktionssignal 30 enthält eine Verarbeitungs-ID und eine Sequenznummer 75, anhand derer das Adaptationsmodul 20 die entsprechenden Heartbeats 24,26 aus der Warteschlange 28 auswählt. Anschließend wird eine Überprüfung 34 der Heartbeats 24,26 vorgenommen. Diese Überprüfung 34 umfasst eine Vorprüfung, bei der die Vollständigkeit der Heartbeats 24,26 geprüft wird, welche der in dem Aktionssignal 30 enthaltenen Sequenznummer 74 zugeordnet sind. Hierbei wird zwischen drei möglichen Szenarien unterschieden:
**1. Alle der Sequenznummer zugehörigen Heartbeats liegen vor:** Da bereits vorab bekannt ist, dass jeder Zyklus genau zwei Hearbeattypen 75, d.h. einen "Verarbeitung gestartet"-Heartbeat 24 und "Verarbeitung beendet"-Heartbeat 26 umfasst, müssen zu jeder Sequenznummer 74 zwei Heartbeats 24,26 vorliegen. Liegen für eine jeweilige Sequenznummer 74 zwei Heartbeats 24,26 vor, kann das Adaptationsmodul 20 eine Auswertung der Heartbeats 24,26 direkt starten und das Auswertungsergebnis zusammen mit der Verarbeitungs-ID und Sequenznummer 74 in einem Auswertungsdatenpaket 32 an das Sicherheitsüberwachungsmodul 22 senden.
**2. Kein Heartbeat liegt vor:** Liegt für eine Sequenznummer 74 kein Heartbeat 24,26 vor, so wartet das Adaptationsmodul 20 eine vordefinierte Zeitspanne oder eine vordefinierte Anzahl von Zyklen ab, speichert entsprechende Metadaten in einem Puffer und sendet ein Standby-Signal an das Sicherheitsüberwachungsmodul 22, wobei das Standby-Signal anzeigt, dass die Heartbeats 24,26, welche der in dem Aktionssignal 30 angegebene Sequenznummer 74 zugehörig sind, noch nicht abschließend verarbeitet sind. Wenn die Heartbeats 24,26 innerhalb der tolerierten Zeitspanne oder Zyklen eintreffen, wird die Auswertung "normal" durchgeführt; andernfalls identifiziert das Adaptationsmodul 20 die Verarbeitung als fehlgeschlagen und sendet ein entsprechendes Signal an das Sicherheitsüberwachungsmodul 22.
**3. Nicht alle Heartbeats liegen vor:** Das Verfahren in einem solchen Fall entspricht weitestgehend dem Verfahren in dem Fall, in dem kein Heartbeat 24,26 vorliegt, wobei im Gegensatz hierzu der vorhandene Heartbeat 24,26 und die Metadaten im Puffer gespeichert werden.

Wenn das Adaptationsmodul 20 das Aktionssignal 30 vom Sicherheitsüberwachungsmodul 22 erhält und festgestellt wurde, dass alle erwarteten Heartbeats 24,26 vorhanden sind, beginnt die Auswertung.

Die Auswertung der Heartbeats 24,26 umfasst dabei folgende Prüfungen:
- **Plausibilitätsprüfung der Heartbeats:** Hierbei überprüft das Adaptationsmodul 20 die Korrektheit der Heartbeats 24,26. Zum einen wird die Checksumme des Heartbeats 24,26 überprüft. Hierfür wird eine Vergleichschecksumme für den Heartbeat 24,26 unter Verwendung der Daten des Heartbeats 24,26 ermittelt. Die Vergleichschecksumme wird dabei unter denselben Vorschriften erzeugt wie die im Heartbeat 24,26 gespeicherte Checksumme. Die ermittelte Vergleichschecksumme wird mit der in dem Heartbeat 24,26 hinterlegten Checksumme verglichen, wobei die Plausibilitätsprüfung als fehlgeschlagen gilt, wenn die Vergleichschecksumme und die hinterlegte Checksumme nicht übereinstimmen. Darüber hinaus wird eine Plausibilität des Erstellungszeitpunkts 72 des Heartbeats 24,26 überprüft. Eine solche Überprüfung umfasst eine Überprüfung der Schlüssigkeit des Erstellungszeitpunkts 72 bzw. des Zeitstempels des Zustandsdatenpakets. Insbesondere wird geprüft, ob der Erstellungszeitpunkt 72 keinen Negativwert aufweist und/oder ob die Zeitbasis des Erstellungszeitpunkts 72 mit der von dem Adaptationsmodul 20 verwendeten Zeitbasis übereinstimmt. Sollte die Überprüfung der Plausibilität des Erstellungszeitpunkts 72 negativ ausfallen, d.h. wenn der Erstellungszeitpunkt 72 einen Negativwert aufweist und/oder die Zeitbasis des Erstellungszeitpunkts 72 mit der des von dem Adaptationsmodul 20 verwendeten Zeitbasis nicht übereinstimmt, so stellt dies beispielsweise einen Fehlerzustand dar und die Plausibilitätsprüfung gilt als fehlgeschlagen. Zuletzt wird noch geprüft, ob die Anzahl der Heartbeats 24,26 der vorgegebenen Anzahl an Heartbeats 24,26 innerhalb eines Zyklus entspricht bzw. ob die Anzahl der Heartbeats 24,26 die vorgegebene Anzahl überschreitet, wobei die Plausibilitätsprüfung als fehlgeschlagen gilt, wenn ob die Anzahl der Heartbeats 24,26 die vorgegebene Anzahl überschreitet. Ist zumindest eine der vorstehenden Prüfungen nicht erfolgreich, so gilt die Plausibilitätsprüfung als fehlgeschlagen.
- **Prüfung der Status der Heartbeats 24,26:** Das Adaptationsmodul 20 ist dazu ausgebildet, das Feld für den Status 76 der Heartbeats 24,26, d.h. der Gesundheit des Senders bzw. des Applikationsmoduls 18, zu analysieren, wobei der Status 76 entweder "true" (positiv) oder "false" (negativ) anzeigt. Alle Status 76 der Heartbeats 24,26 werden mittels einer logischen UND-Verknüpfung kombiniert, um das endgültige Auswertungsergebnis für die gegebene Sequenznummer 74 zu erhalten. D.h. das Auswertungsergebnis ist positiv, wenn alle Status 76 der Heartbeats 24,26 "true" sind, und negativ, sobald eines der Status 76 der Heartbeats 24,26 "false" ist. Zusätzlich können, je nach Applikation, die in dem Datenfeld Attribut 77 der Heartbeats 24,26 enthaltenen Daten zur Auswertung herangezogen werden, beispielsweise spezifische Statuscodes, die von dem Applikationsmodul 18 verwendet werden.

Nach der Auswertung wird das Auswertungsergebnis zusammen mit einem Safety Header als ein Auswertungsdatenpaket 32 in ein Format konvertiert, das das Sicherheitsüberwachungsmodul 22 "versteht" bzw. verarbeiten kann. Diese Daten werden dann über die bereitgestellten Schnittstellen an das Sicherheitsüberwachungsmodul 22 gesendet, das diese daraufhin in die Sicherheitsinfrastruktur 60 der Containerorchestrierungs-Ausführungsumgebung integriert. Dieser Prozess stellt sicher, dass die Heartbeats 24,26 korrekt und zuverlässig ausgewertet werden und dass im Falle von Fehlern entsprechende Maßnahmen ergriffen werden können. Beispielsweise wird in Reaktion auf das Identifizieren eines Fehlerzustands, ein Sicherheitssignal 39 von dem Sicherheitsüberwachungsmodul 22 an eine Steuerung übermittelt, um eine Sicherheitsaktion einzuleiten. Die Sicherheitsinfrastruktur 60 der Containerorchestrierungs-Ausführungsumgebung stellt beispielsweise eine spezialisierte Infrastruktur oder Architektur dar, die Sicherheits- und Compliance-Anforderungen in verteilten Systemen sicherstellt.

Fig. 3a und 3b zeigen zwei unterschiedliche Ausführungsformen der Erfindung. Das Applikationsmodul 18, das Adaptationsmodul 20 sowie das Sicherheitsüberwachungsmodul 22 sind in Fig. 3a und 3b sind innerhalb des Kubernetes-Ökösystem als Teil eines Kubernetes-Pods 36, d.h. als Teil einer Anwendungskomponente, ausgebildet.

In Fig. 3a sind das Applikationsmodul 18 und das Adaptationsmodul 20 jedoch auf demselben Container 38 implementiert, wobei das Adaptationsmodul 20 und das Applikationsmodul 18 dieselben Softwaretechnologien verwenden. Beispielsweise nutzen das Applikationsmodul 18 und das Adaptationsmodul 20 dasselbe Framework, System, dieselbe Programmierbibliothek oder -paradigma und/oder dieselben Datenstrukturen und -typen. Diese Variante hat den Vorteil, dass keine aufwändigen Anpassungsmechanismen zwischen Adaptationsmodul 20 und Applikationsmodul 18 vorgenommen werden müssen, da die beiden Module bereits auf demselben Container 38 implementiert sind und ihnen somit dieselben Softwaretechnologien zugrunde liegen.

Auf der anderen Seite sind das Applikationsmodul 18 und das Adaptationsmodul 20 In Fig. 3b auf unterschiedlichen Containern 38 implementiert, wobei das Adaptationsmodul 20 mittels Anpassungsmechanismen wie RPC (Remote Procedure Call) an die von dem Applikationsmodul 18 genutzten Softwaretechnologien angepasst ist. Diese Variante hat den Vorteil einer erhöhten Resilienz, wenn mehrere Applikationsmodule 18 dasselbe Adaptationsmodul 20 nutzen bzw. mit demselben Adaptationsmodul 20 Daten austauschen. Zudem ist diese Variante mit weniger Overhead und weniger Latenz realisierbar.

Fig. 4 veranschaulicht eine Struktur eines Heartbeats 24,26, wobei der Heartbeat 24,26 folgende Datenfelder umfasst: eine Heartbeat-ID 70 vom Datentyp string, eine Applikationsbezeichnung 71 vom Datentyp string, einen Erstellungszeitpunkt 72 des Heartbeats 24,26 vom Datentyp Int, ein Verifikationszeichen 73 vom Datentyp string, eine Sequenznummer 74 vom Datentyp Int, einen Typ 75 des Heartbeats 24,26 vom Datentyp string, einen Status 76 des Heartbeats 24,26 vom Datentyp Boolean oder ein Attribut 77 des Heartbeats 24,26 vom Datentyp List.

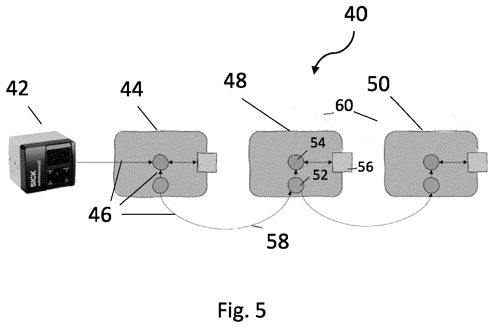

Fig. 5 zeigt ein Ablaufdiagramm, das eine Ausführungsform der Erfindung innerhalb einer ROS-Anwendung 40 veranschaulicht.

Hierbei wird ein ROS-gestütztes System für die Verarbeitung und Analyse von Bilddaten verwendet, welche im vorliegenden Fall von einer SICK safeVisionary2 Kamera 42 (sV2) bereitgestellt werden. Das System besteht aus mehreren ROS-Knoten, die zusammenarbeiten, um Personen in einem definierten Bereich zu erkennen und zu zählen. Die ROS-Knoten entsprechen beispielweise den vorstehend beschriebenen Modulen und sind unabhängige Programme oder Prozesse in einem ROS-System. Diese ROS-Knoten sind in Kubernetes-Containern 38 als Kubernetes-Pods 36 bereitgestellt, wobei alle Nachrichten innerhalb des ROS-Systems über ein internes ROS-Nachrichtensystem verwaltet werden. ROS dient hierbei insbesondere für die Anbindung der sV2-Kamera, der Nachrichtendefinition und zur Verteilung von Nachrichten innerhalb von ROS.

Die Verarbeitungskette im System beginnt mit einem Sensorport-Pod 44, welcher Daten von der sV2-Kamera sammelt. Die gesammelten Sensordaten werden über sogenannte ROS-Topics 46 bereitgestellt und sind somit im gesamten ROS-Ökosystem verfügbar. ROS-Topics 46 sind Kommunikationskanäle in einem ROS-Netzwerk, die den Austausch von Nachrichten zwischen ROS-Knoten ermöglichen. In einem ROS-System können verschiedene Knoten miteinander kommunizieren, indem sie Nachrichten auf diesen ROS-Topics 46 veröffentlichen oder abonnieren. Der Rohdatenfilter-Pod 48 ist für das Filtern der eingehenden Rohdaten zuständig, bevor diese weiterverarbeitet werden. Anschließend wird über den Objekterkennungs-Pod 50 die Personenerkennung durchgeführt und die Anzahl der Personen in einem definierten Bereich ermittelt.

Jeder Kubernetes-Pod 36 umfasst einen jeweiligen ROS-Applikationsknoten 52, einen ROS-Adaptationsknoten 54 und einen Safety Watcher 56, d.h. einen Sicherheitsüberwachungsknoten, wobei ein jeweiliger Kubernetes-Pod 36 als Container 38 deployt ist. Ferner ist der Safety Watcher 56 in einem eigenständigen Container 38 implementiert. Das Adaptationsmodul 20 ist demnach selbst ein ROS-Knoten, nämlich der ROS-Applikationsknoten 52, der nahtlos mit den ROS-Nachrichten und deren Formaten interagiert.

Im Folgenden wird der Verarbeitungsprozess eines Kubernetes-Pods 36 rein beispielhaft anhand des Rohdatenfilter-Pods 48 dargelegt, wobei die Ausführungen auf die anderen Kubernetes-Pods übertragbar sind. Die Begriffe ROS-Applikationsknoten 52, ROS-Adaptationsknoten 54 und Safety Watcher 56 beziehen sich somit nachfolgend auf die jeweiligen Knoten des Rohdatenfilter-Pods 48, falls sich aus der Beschreibung nichts Gegenteiliges ergibt.

Der ROS-Applikationsknoten 52 empfängt Nachrichten 58 vom vorhergehenden ROS-Applikationsknoten 52, d.h. vom vorgehenden Pod, über das interne ROS-Nachrichtensystem. Nach Erhalt einer Nachricht 58 beginnt der ROS-Applikationsknoten 52 die Bearbeitung und sendet einen "Verarbeitung gestartet"-Heartbeat 24 sowie einen "Verarbeitung beendet"-Heartbeat 26 an den entsprechenden ROS-Adaptationsknoten 54, d.h. an den Rohdatenfilter-Adaptationsknoten. Da der Adaptationsknoten ebenfalls ein ROS-Knoten ist und die Heartbeats 24,26 als ROS-Nachrichtentypen definiert sind, ist er in der Lage, diese Heartbeats 24,26 zu empfangen und zu verarbeiten. Die Heartbeats 24,26 können beispielsweise eine in Fig. 4 gezeigte Struktur aufweisen.

Der ROS-Adaptationsknoten 54 empfängt die Heartbeats 24,26 und speichert sie in einer Map, die als Warteschlange 28 dient. Diese Map hat die Struktur *Map<Sequenznummer, List[Heartbeat]>*, wodurch Heartbeats 24,26 nach ihrer Sequenznummer 74 sortiert und bei Bedarf gezielt abgerufen werden können. Hierbei wird sichergestellt, dass die Heartbeats 24,26 chronologisch und korrekt verarbeitet werden.

Parallel zur Verarbeitung durch den ROS-Adaptationsknoten 54 läuft die Verarbeitung über eine Sicherheitsinfrastruktur 60 der Containerorchestrierungs-Ausführungsumgebung. Dabei sendet der Safety Watcher 56 des vorhergehenden Pods einen ein Safety Watcher Signal in Form eines Safety Headers über die Sicherheitsinfrastruktur 60, der durch den Safety Watcher 56 des aktuellen Pods aufgenommen und an den ROS-Adaptationsknoten 54 weitergeleitet wird. Dieser Safety Header enthält eine Sequenznummer 74, eine Verarbeitungs-ID und eine Checksumme, die im vorhergehenden ROS-Adaptationsknoten 54 auf einen Payload der Daten, d.h. auf die Nutzdaten, berechnet wurde. Beispielsweise handelt es sich hierbei um einen applikationsspezifischen Payload aus der allgemeinen Beschreibung der Daten. Der Transfer des Safety Headers erfolgt beispielsweise über eine gRPC Streaming-Verbindung, die bei einer Initialisierung des ROS-Adaptationsknotens 54 geöffnet wurde.

Der ROS-Adaptationsknoten 54 erhält das Signal aus dem Safety Watcher 56 und greift basierend auf der Sequenznummer 74 auf die zugehörigen, in der Warteschlange 28 gespeicherten Heartbeats 24,26 zu. Folgende Prüfungen werden anschließend durchgeführt: Zuerst wird überprüft, ob alle erwarteten Heartbeats 24,26 vorhanden sind. Hierzu wird beispielsweise eine zuvor beschriebene Vollständigkeitsprüfung durchgeführt. Fehlen Heartbeats 24,26, führt dies direkt zu einer negativen Auswertung, d.h. es ist keine Toleranzzeitspanne für nicht vorhandene Heartbeats 24,26 vorgesehen. Anschließend vergleicht der ROS-Adaptationsknoten 54 die vom Safety Watcher 56 Signal gesendete Checksumme mit der Checksumme, die im "Verarbeitung gestartet"-Heartbeat 24 enthalten ist. Die Checksumme kann beispielsweise in einem Attributfeld 77 des Heartbeats 24,26 hinterlegt sein. Zudem werden die Status 76 der Heartbeats 24,26 überprüft, wobei ein positiver Status 76 durch ein Statuswert 'HEALTH_OK' signalisiert werden kann.

Wenn eine der angeführten Prüfungen negativ ausfällt, sendet der ROS-Adaptationsknoten 54 unmittelbar eine negative Auswertungsnachricht, d.h. ein Auswertungsdatenpaket 32, welches einen Fehlerzustand angibt, an den Safety Watcher 56. Dies markiert den Zeitpunkt, an dem das ROS-System verlassen wird und die regulären Überwachungs- und/oder Sicherheitsmechanismen der Sicherheitsinfrastruktur 60 der Containerorchestrierungs-Ausführungsumgebung zur Anwendung kommen. Insgesamt sorgt dieser Ansatz dafür, dass die Sicherheit und Zuverlässigkeit der Systemverarbeitung gewährleistet sind, indem er eine präzise Überwachung und Validierung der Heartbeats 24,26 sowie eine genaue Reaktion auf Sicherheitsvorfälle ermöglicht.

### Bezugszeichenliste

- 12: Industriemaschine
- 14: Datenerzeugungseinheit
- 16: Datenverarbeitungseinheit
- 17: Verbindung
- 18: Applikationsmodul
- 20: Adaptationsmodul
- 22: Sicherheitsüberwachungsmodul
- 24: "Verarbeitung gestartet"-Heartbeat
- 26: "Verarbeitung beendet"-Heartbeat
- 28: Warteschlange
- 30: Aktionssignal
- 32: Auswertungsdatenpaket
- 34: Überprüfung
- 36: Kubernetes-Pod
- 38: Container
- 39: Sicherheitssignal
- 40: ROS-Anwendung
- 42: safeVisionary2 Kamera
- 44: Sensorport-Pod
- 46: ROS-Topics
- 48: Rohdatenfilter-Pod
- 50: Objekterkennungs-Pod
- 52: ROS-Applikationsknoten
- 54: ROS-Adaptationsknoten
- 56: Safety Watcher
- 58: Nachricht
- 60: Sicherheitsinfrastruktur
- 70: Heartbeat-ID
- 71: Applikationsbezeichnung
- 72: Erstellungszeitpunkt
- 73: Verifikationszeichen
- 74: Sequenznummer
- 75: Typ
- 76: Status
- 77: Attribut

## Patentansprüche

1. Vorrichtung zum Einsatz im industriellen Umfeld, insbesondere Industriemaschine (12), zur sicheren Verarbeitung von Daten innerhalb einer Software-Container-Umgebung, umfassend:
eine Datenerzeugungseinheit (14) zur Erzeugung von Applikationsdaten,
eine Datenverarbeitungseinheit (16) zur Verarbeitung der von der Datenerzeugungseinheit (14) bereitgestellten Applikationsdaten innerhalb der Software-Container-Umgebung, wobei die Datenverarbeitungseinheit (16) als Ausführungsumgebung dafür ausgebildet ist, mehrere Logikmodule auf der Datenverarbeitungseinrichtung ablaufen zu lassen, wobei die Logikmodule umfassen:
zumindest ein Applikationsmodul (18) zur Ausführung zumindest einer Applikation unter Verwendung der Applikationsdaten, wobei das Applikationsmodul (18) dazu konfiguriert ist, Zustandsdaten zu erzeugen, welche der Applikation zugehörig sind, wobei die Zustandsdaten angeben, ob eine Applikation fehlerfrei ausgeführt wird oder ein fehlerhafter Zustand vorliegt, welcher die Ausführung einer Sicherheitsfunktion erfordert,
ein Adaptationsmodul (20), das dazu konfiguriert ist, die Zustandsdaten von dem Applikationsmodul (18) zu empfangen und die Zustandsdaten in ein für ein Sicherheitsüberwachungsmodul (22) verarbeitbares Format umzuwandeln,
das Sicherheitsüberwachungsmodul (22), das dazu konfiguriert ist, die umgewandelten Zustandsdaten von dem Adaptationsmodul (20) zu empfangen und auf Grundlage der umgewandelten Zustandsdaten zu ermitteln, ob ein Fehlerzustand vorliegt, wobei das Sicherheitsüberwachungsmodul (22) eine sicherheitsgerichtete Auswertung der umgewandelten Zustandsdaten leistet,
wobei das Applikationsmodul (18), das Adaptationsmodul (20) und das Sicherheitsüberwachungsmodul (22) als Teil einer, insbesondere eigenständigen, Anwendungskomponente ausgebildet sind.

2. Vorrichtung nach Anspruch 1,
wobei das Applikationsmodul (18), das Adaptationsmodul (20) und/oder das Sicherheitsüberwachungsmodul (22) auf dieselben Ressourcen zugreifen.

3. Vorrichtung nach Anspruch 1 oder 2,
wobei das Applikationsmodul (18) und das Adaptationsmodul (20) auf demselben Container (38) implementiert sind, wobei das Adaptationsmodul (20) und das Applikationsmodul (18) dieselben Softwaretechnologien verwenden.

4. Vorrichtung nach einem der vorstehenden Ansprüche,
wobei das Applikationsmodul (18) und das Adaptationsmodul (20) auf unterschiedlichen Containern (38) implementiert sind, wobei das Adaptationsmodul (20) mittels Anpassungsmechanismen an das Applikationsmodul (18), insbesondere an die von der Applikationsmodul (18) genutzten Softwaretechnologien, angepasst ist.

5. Vorrichtung nach einem der vorstehenden Ansprüche,
wobei das Adaptationsmodul (20) mit einer Vielzahl von unterschiedlichen Applikationsmodulen (18) kommuniziert und/oder für eine Vielzahl von unterschiedlichen Applikationen verwendet wird.

6. Vorrichtung nach einem der vorstehenden Ansprüche,
wobei die Zustandsdaten Zustandsdatenpakete umfassen,
wobei ein Zustandsdatenpaket zumindest eines der folgenden umfasst:
eine Zustandsdatenpaket-ID, eine Applikationsbezeichnung (71), einen Erstellungszeitpunkt (72) des Zustandsdatenpakets, ein Verifikationszeichen (73), eine Sequenznummer (74), einen Typ (75) des Zustandsdatenpakets, einen Status (76) des Zustandsdatenpakets oder ein Attribut (77) des Zustandsdatenpakets.

7. Vorrichtung nach Anspruch 6,
wobei das Applikationsmodul (18) dazu konfiguriert ist, die Zustandsdatenpakete zyklisch zu erzeugen, wobei innerhalb eines Zyklus eine vordefinierte Anzahl an Zustandsdatenpaketen erzeugt wird, wobei die Zustandsdatenpakete eines selben Zyklus dieselbe Sequenznummer (74) aufweisen.

8. Vorrichtung nach einem der Ansprüche 5 bis 7,
wobei das Adaptationsmodul (20) dazu konfiguriert ist, die Zustandsdatenpakete in einer Warteschlange (28) in einer Reihenfolge anzuordnen, welche dem chronologischen Eintreffen der Zustandsdatenpakete entspricht.

9. Vorrichtung nach einem der Ansprüche 5 bis 8,
wobei das Adaptationsmodul (20) dazu konfiguriert ist, in Reaktion auf ein von dem Sicherheitsüberwachungsmodul (22) empfangenes Aktionssignal (30), welches eine Verarbeitung-ID, eine Sequenznummer (74) und/oder ein Verifikationszeichen (73) umfasst, die Zustandsdatenpakete zu überprüfen, welche der in dem Aktionssignal (30) hinterlegten Sequenznummer (74) zugehörig sind.

10. Vorrichtung nach Anspruch 9,
wobei die Überprüfung (34) eine Vorprüfung umfasst, wobei die Vorprüfung umfasst:
eine erste Vollständigkeitsprüfung, wobei die Vollständigkeitsprüfung positiv ist, wenn für die Sequenznummer (74) eine vorgegebene Anzahl von zugehörigen Zustandsdatenpaketen vorliegen, und negativ, wenn für die Sequenznummer (74) weniger als die vorgegebene Anzahl an Zustandsdatenpaketen vorliegen,
wobei bei einer positiven ersten Vollständigkeitsprüfung eine Auswertung der Zustandsdatenpakete erfolgt,
wobei bei einer negativen ersten Vollständigkeitsprüfung eine vordefinierte Zeitspanne abgewartet wird bis eine zweite Vollständigkeitsprüfung erfolgt,
wobei bei einer positiven zweiten Vollständigkeitsprüfung eine Auswertung der Zustandsdatenpakete erfolgt,
wobei bei einer negativen zweiten Vollständigkeitsprüfung das Adaptationsmodul (20) dazu konfiguriert ist, ein Fehlersignal in einem für das Sicherheitsüberwachungsmodul (22) lesbaren Format an das Sicherheitsüberwachungsmodul (22) zu senden.

11. Vorrichtung nach einem der Ansprüche 9 oder 10,
wobei die Überprüfung (34) der Zustandsdaten eine Auswertung umfasst, wobei die Auswertung umfasst:
eine Plausibilitätsprüfung zumindest eines der Zustandsdatenpakete und/oder eine Statusprüfung zumindest eines der Zustandsdatenpakete,
wobei das Adaptationsmodul (20) dazu konfiguriert ist, bei einer fehlgeschlagenen Plausibilitätsprüfung und/oder bei einer fehlgeschlagenen Statusprüfung ein Auswertungsdatenpaket (32) in einem für das Sicherheitsüberwachungsmodul (22) lesbaren Format an das Sicherheitsüberwachungsmodul (22) zu senden, wobei das Auswertungsdatenpaket (32) einen Fehlerzustand angibt.

12. Vorrichtung nach Anspruch 11,
wobei die Plausibilitätsprüfung zumindest eines der Zustandsdatenpakete folgende Prüfungen umfasst:
Überprüfung (34) des Verifikationszeichen (73) des Zustandsdatenpakets, welche eine Ermittlung eines Vergleichsverifikationszeichens für ein Zustandsdatenpaket unter Verwendung der Daten eines Zustandsdatenpakets und einen Vergleich des ermittelten Vergleichsverifikationszeichens mit dem Verifikationszeichen (73) des Zustandsdatenpakets umfasst,
Überprüfung (34) einer Plausibilität des Erstellungszeitpunkts (72) des Zustandsdatenpakets und/oder
Überprüfung (34), ob die Anzahl der Zustandsdatenpakete eine vorgegebene Anzahl überschreitet oder unterschreitet,
wobei die Plausibilitätsprüfung als fehlgeschlagen gilt, wenn zumindest eine der in der Plausibilitätsprüfung umfassten Prüfungen für zumindest eines der Zustandsdatenpakete fehlschlägt.

13. Vorrichtung nach Anspruch 11 oder 12,
wobei die Statusprüfung umfasst:
Prüfung der Status (76) der Zustandsdatenpakete, wobei die Statusprüfung als fehlgeschlagen gilt, wenn zumindest eines der Zustandsdatenpakete einen Status (76) "fehlgeschlagen" aufweist.

14. Sicherheitsverfahren zur sicheren Verarbeitung von Daten innerhalb einer Software-Container-Umgebung, wobei das Verfahren umfasst, dass:
von einer Datenerzeugungseinheit (14) Applikationsdaten erzeugt werden,
auf einer Datenverarbeitungseinheit (16) zur Verarbeitung der von der Datenerzeugungseinheit (14) bereitgestellten Applikationsdaten innerhalb der Software-Container-Umgebung mehrere Logikmodule auf der Datenverarbeitungseinrichtung ablaufen, wobei die Logikmodule ein Applikationsmodul (18), ein Adaptationsmodul (20) und ein Sicherheitsüberwachungsmodul (22) umfassen,
von dem Applikationsmodul (18) Zustandsdaten erzeugt werden, welche einer Applikation zugehörig sind, wobei die Zustandsdaten angeben, ob eine Applikation fehlerfrei ausgeführt wird oder ein fehlerhafter Zustand vorliegt, welcher die Ausführung einer Sicherheitsfunktion erfordert,
von dem Adaptationsmodul (20) die Zustandsdaten empfangen werden und die Zustandsdaten in ein für ein Sicherheitsüberwachungsmodul (22) verarbeitbares Format umgewandelt werden,
wobei die umgewandelten Zustandsdaten von dem Sicherheitsüberwachungsmodul (22) empfangen werden und auf Grundlage der umgewandelten Zustandsdaten ermittelt wird, ob ein Fehlerzustand vorliegt, wobei das Sicherheitsüberwachungsmodul (22) eine sicherheitsgerichtete Auswertung der umgewandelten Zustandsdaten leistet,
wobei das Applikationsmodul (18), das Adaptationsmodul (20) und das Sicherheitsüberwachungsmodul (22) als Teil einer, insbesondere eigenständigen, Anwendungskomponente ausgebildet sind.

15. Computerlesbares Speichermedium, umfassend Befehle, die bei der Ausführung durch einen Computer diesen veranlassen, das Sicherheitsverfahren nach Anspruch 14 auszuführen.

## Claims

1. An apparatus for use in an industrial environment, in particular an industrial machine (12), for the secure processing of data within a software container environment, comprising:
a data generation unit (14) for generating application data,
a data processing unit (16) for processing the application data provided by the data generation unit (14) within the software container environment,
wherein the data processing unit (16) is designed as an execution environment to allow a plurality of logic modules to run on the data processing device, wherein the logic modules comprise:
at least one application module (18) for executing at least one application using the application data, wherein the application module (18) is configured to generate state data associated with the application, wherein the state data indicate whether an application is executed without error or whether a faulty state exists that requires the execution of a safety function,
an adaptation module (20) which is configured to receive the state data from the application module (18) and to convert the state data into a format processable by a safety monitoring module (22),
the safety monitoring module (22) which is configured to receive the converted state data from the adaptation module (20) and to determine, based on the converted state data, whether a fault condition exists, wherein the safety monitoring module (22) performs a safety-oriented evaluation of the converted state data,
wherein the application module (18), the adaptation module (20) and the safety monitoring module (22) are designed as part of an application component, in particular a standalone one.

2. An apparatus according to claim 1,
wherein the application module (18), the adaptation module (20) and/or the safety monitoring module (22) accesses/access the same resources.

3. An apparatus according to claim 1 or 2,
wherein the application module (18) and the adaptation module (20) are implemented on the same container (38), wherein the adaptation module (20) and the application module (18) use the same software technologies.

4. An apparatus according to any one of the preceding claims,
wherein the application module (18) and the adaptation module (20) are implemented on different containers (38), wherein the adaptation module (20) is adapted to the application module (18), in particular to the software technologies used by the application module (18), by means of adaptation mechanisms.

5. An apparatus according to any one of the preceding claims,
wherein the adaptation module (20) communicates with a plurality of different application modules (18) and/or is used for a plurality of different applications.

6. An apparatus according to any one of the preceding claims, wherein the state data comprise state data packets,
wherein a state data packet comprises at least one of the following: a state data packet ID, an application designation (71), a creation time (72) of the state data packet, a verification token (73), a sequence number (74), a type (75) of the state data packet, a status (76) of the state data packet or an attribute (77) of the state data packet.

7. An apparatus according to claim 6,
wherein the application module (18) is configured to generate the state data packets cyclically, wherein a predefined number of state data packets is generated within a cycle, wherein the state data packets of the same cycle have the same sequence number (74).

8. An apparatus according to any one of the claims 5 to 7,
wherein the adaptation module (20) is configured to arrange the state data packets in a queue (28) in an order corresponding to the chronological arrival of the state data packets.

9. An apparatus according to any one of the claims 5 to 8,
wherein the adaptation module (20) is configured, in response to an action signal (30) which is received from the safety monitoring module (22) and which comprises a processing ID, a sequence number (74) and/or a verification token (73), to verify the state data packets which are associated with the sequence number (74) stored in the action signal (30).

10. An apparatus according to claim 9,
wherein the verification (34) comprises a preliminary check, wherein the preliminary check comprises:
a first completeness check, wherein the completeness check is positive if a predetermined number of associated state data packets are present for the sequence number (74), and negative if fewer than the predetermined number of state data packets are present for the sequence number (74), wherein, if the first completeness check is positive, an evaluation of the state data packets is performed,
wherein, if the first completeness check is negative, a predefined time interval is waited out until a second completeness check is performed, wherein, if the second completeness check is positive, an evaluation of the state data packets is performed,
wherein, if the second completeness check is negative, the adaptation module (20) is configured to send an error signal in a format readable by the safety monitoring module (22) to the safety monitoring module (22).

11. An apparatus according to one of the claims 9 or 10,
wherein the verification (34) of the state data comprises an evaluation, wherein the evaluation comprises:
a plausibility check of at least one of the state data packets and/or a status check of at least one of the state data packets,
wherein the adaptation module (20) is configured to send, in the event of a failed plausibility check and/or a failed status check, an evaluation data packet (32) in a format readable by the safety monitoring module (22) to the safety monitoring module (22), wherein the evaluation data packet (32) indicates a fault condition.

12. An apparatus according to claim 11,
wherein the plausibility check of at least one of the state data packets comprises the following checks:
verification (34) of the verification token (73) of the state data packet, which comprises determining a comparison verification token for a state data packet using the data of a state data packet and comparing the determined comparison verification token with the verification token (73) of the state data packet,
verification (34) of a plausibility of the creation time (72) of the state data packet and/or
verification (34) whether the number of state data packets exceeds or falls short of a predetermined number,
wherein the plausibility check is deemed to have failed if at least one of the checks included in the plausibility check fails for at least one of the state data packets.

13. An apparatus according to claim 11 or 12,
wherein the status check comprises:
checking the status (76) of the state data packets, wherein the status check is deemed to have failed if at least one of the state data packets has a status (76) of "failed".

14. A safety method for securely processing data within a software container environment, wherein the method comprises that:
application data are generated by a data generation unit (14),
on a data processing unit (16) for processing the application data provided by the data generation unit (14) within the software container environment, a plurality of logic modules run on the data processing device, wherein the logic modules comprise an application module (18), an adaptation module (20) and a safety monitoring module (22),
state data associated with an application are generated by the application module (18), wherein the state data indicate whether an application is executed without error or whether a faulty state exists that requires the execution of a safety function,
the state data are received by the adaptation module (20) and the state data are converted into a format processable by a safety monitoring module (22),
wherein the converted state data are received by the safety monitoring module (22) and, based on the converted state data, it is determined whether a fault condition exists, wherein the safety monitoring module (22) performs a safety-oriented evaluation of the converted state data,
wherein the application module (18), the adaptation module (20) and the safety monitoring module (22) are designed as part of an application component, in particular a standalone one.

15. A computer-readable storage medium comprising instructions which, when executed by a computer, cause the computer to perform the safety method according to claim 14.

## Revendications

1. Dispositif destiné à être utilisé dans un environnement industriel, en particulier une machine industrielle (12), pour le traitement sécurisé de données au sein d'un environnement de conteneurs logiciels, comprenant :
une unité de génération de données (14) destinée à générer des données d'application,
une unité de traitement de données (16) destinée à traiter les données d'application fournies par l'unité de génération de données (14) au sein de l'environnement de conteneurs logiciels, l'unité de traitement de données (16) étant conçue comme un environnement d'exécution permettant d'exécuter plusieurs modules logiques sur le dispositif de traitement de données, les modules logiques comprenant :
au moins un module d'application (18) destiné à exécuter au moins une application en utilisant les données d'application, le module d'application (18) étant configuré pour générer des données d'état associées à l'application, les données d'état indiquant si une application s'exécute sans erreur ou si un état défectueux est présent, ce qui nécessite l'exécution d'une fonction de sécurité,
un module d'adaptation (20) configuré pour recevoir les données d'état provenant du module d'application (18) et pour convertir les données d'état en un format pouvant être traité par un module de surveillance de sécurité (22),
le module de surveillance de sécurité (22), qui est configuré pour recevoir les données d'état converties provenant du module d'adaptation (20) et pour déterminer, sur la base des données d'état converties, s'il existe une condition de défaut, le module de surveillance de sécurité (22) effectuant une évaluation axée sur la sécurité des données d'état converties,
le module d'application (18), le module d'adaptation (20) et le module de surveillance de sécurité (22) étant conçus comme faisant partie d'un composant d'application, en particulier autonome.

2. Dispositif selon la revendication 1,
dans lequel le module d'application (18), le module d'adaptation (20) et/ou le module de surveillance de sécurité (22) accèdent aux mêmes ressources.

3. Dispositif selon la revendication 1 ou 2,
dans lequel, le module d'application (18) et le module d'adaptation (20) sont implémentés sur le même conteneur (38), le module d'adaptation (20) et le module d'application (18) utilisant les mêmes technologies logicielles.

4. Dispositif selon l'une des revendications précédentes,
dans lequel le module d'application (18) et le module d'adaptation (20) sont implémentés sur des conteneurs (38) différents, le module d'adaptation (20) étant adapté au module d'application (18), en particulier aux technologies logicielles utilisées par le module d'application (18), au moyen de mécanismes d'adaptation.

5. Dispositif selon l'une des revendications précédentes,
dans lequel le module d'adaptation (20) communique avec une pluralité de modules d'application (18) différents et/ou est utilisé pour une pluralité d'applications différentes.

6. Dispositif selon l'une des revendications précédentes,
dans lequel les données d'état comprennent des paquets de données d'état,
un paquet de données d'état comprenant au moins l'un des éléments suivants : un identifiant de paquet de données d'état, une désignation d'application (71), un instant de création (72) du paquet de données d'état, un jeton de vérification (73), un numéro de séquence (74), un type (75) du paquet de données d'état, un statut (76) du paquet de données d'état ou un attribut (77) du paquet de données d'état.

7. Dispositif selon la revendication 6,
dans lequel le module d'application (18) est configuré pour générer les paquets de données d'état de manière cyclique, un nombre prédéfini de paquets de données d'état étant généré au cours d'un cycle, les paquets de données d'état d'un même cycle présentant le même numéro de séquence (74).

8. Dispositif selon l'une des revendications 5 à 7,
dans lequel le module d'adaptation (20) est configuré pour disposer les paquets de données d'état dans une file d'attente (28) dans un ordre qui correspond à l'arrivée chronologique des paquets de données d'état.

9. Dispositif selon l'une des revendications 5 à 8,
le module d'adaptation (20) étant configuré pour, en réponse à un signal d'action (30) reçu du module de surveillance de sécurité (22) et comprenant un identifiant de traitement, un numéro de séquence (74) et/ou un jeton de vérification (73), de vérifier les paquets de données d'état associés au numéro de séquence (74) enregistré dans le signal d'action (30).

10. Dispositif selon la revendication 9,
dans lequel la vérification (34) comprend un contrôle préliminaire, lequel comprend :
un premier contrôle d'intégralité, le contrôle d'intégralité étant positif lorsqu'il existe un nombre prédéterminé de paquets de données d'état associés au numéro de séquence (74), et négatif lorsqu'il existe moins que le nombre prédéterminé de paquets de données d'état associés au numéro de séquence (74),
dans lequel, en cas de premier contrôle d'intégralité positif, une évaluation des paquets de données d'état est effectuée,
en cas de premier contrôle d'intégralité négatif, un délai prédéfini est respecté jusqu'à ce qu'un deuxième contrôle d'intégralité soit effectué, une évaluation des paquets de données d'état étant effectuée en cas de deuxième contrôle d'intégralité positif,
et, en cas de deuxième contrôle d'intégralité négatif, le module d'adaptation (20) est configuré pour envoyer un signal d'erreur au module de surveillance de sécurité (22) dans un format lisible par celui-ci.

11. Dispositif selon l'une des revendications 9 ou 10,
dans lequel la vérification (34) des données d'état comprend une évaluation, laquelle évaluation comprend :
un contrôle de plausibilité d'au moins l'un des paquets de données d'état et/ou un contrôle de statut d'au moins l'un des paquets de données d'état, le module d'adaptation (20) est configuré pour, en cas d'échec d'un contrôle de plausibilité et/ou d'un contrôle de statut, envoyer un paquet de données d'évaluation (32) au module de surveillance de sécurité (22) dans un format lisible par celui-ci, le paquet de données d'évaluation (32) indiquant une condition de défaut.

12. Dispositif selon la revendication 11,
dans lequel le contrôle de plausibilité d'au moins l'un des paquets de données d'état comprend les contrôles suivants :
vérification (34) du jeton de vérification (73) du paquet de données d'état, qui comprend la détermination d'un jeton de vérification de comparaison pour un paquet de données d'état à l'aide des données d'un paquet de données d'état et une comparaison du jeton de vérification de comparaison déterminé avec le jeton de vérification (73) du paquet de données d'état,
vérification (34) de la plausibilité de l'instant de création (72) du paquet de données d'état et/ou
vérification (34) visant à déterminer si le nombre de paquets de données d'état est supérieur ou inférieur à un nombre prédéterminé,
le contrôle de plausibilité étant considéré comme ayant échoué si au moins l'un des contrôles compris dans le contrôle de plausibilité échoue pour au moins l'un des paquets de données d'état.

13. Dispositif selon la revendication 11 ou 12,
dans lequel le contrôle de statut comprend :
vérification du statut (76) des paquets de données d'état, le contrôle de statut étant considéré comme ayant échoué si au moins l'un des paquets de données d'état présente un statut (76) « échoué ».

14. Procédé de sécurité pour le traitement sécurisé de données au sein d'un environnement de conteneurs logiciels, le procédé comprenant :
la génération de données d'application par une unité de génération de données (14),
sur une unité de traitement de données (16) destinée à traiter les données d'application fournies par l'unité de génération de données (14) au sein de l'environnement de conteneurs logiciels, plusieurs modules logiques s'exécutent sur le dispositif de traitement de données, les modules logiques comprenant un module d'application (18), un module d'adaptation (20) et un module de surveillance de sécurité (22),
le module d'application (18) génère des données d'état associées à une application, lesdites données d'état indiquant si une application s'exécute sans erreur ou si un état défectueux est présent, ce qui nécessite l'exécution d'une fonction de sécurité,
le module d'adaptation (20) reçoit les données d'état et les convertit dans un format pouvant être traité par un module de surveillance de sécurité (22),
les données d'état converties étant reçues par le module de surveillance de sécurité (22) et une condition de défaut étant déterminée sur la base des données d'état converties, le module de surveillance de sécurité (22) effectuant une évaluation axée sur la sécurité des données d'état converties,
le module d'application (18), le module d'adaptation (20) et le module de surveillance de sécurité (22) étant conçus comme faisant partie d'un composant d'application, en particulier autonome.

15. Support de stockage lisible par ordinateur, comprenant des instructions qui, lorsqu'elles sont exécutées par un ordinateur, amènent celui-ci à exécuter le procédé de sécurité selon la revendication 14.
